Europäisches Patentamt

European Patent Office

Office européen des brevets

(19)

(11) Veröffentlichungsnummer : **0 591 259 B1**

## (12) EUROPÄISCHE PATENTSCHRIFT

(45) Veröffentlichungstag der Patentschrift :
**30.08.95 Patentblatt 95/35**

(51) Int. Cl.$^6$ : **G06F 15/80**

(21) Anmeldenummer : **92911631.7**

(22) Anmeldetag : **16.06.92**

(86) Internationale Anmeldenummer :
**PCT/DE92/00494**

(87) Internationale Veröffentlichungsnummer :
**WO 93/00652 07.01.93 Gazette 93/02**

(54) **VERFAHREN ZUR VERARBEITUNG VON UNSICHERHEITEN VON EINGANGSDATEN IN NEURONALEN NETZWERKEN.**

(30) Priorität : **24.06.91 DE 4120828**

(43) Veröffentlichungstag der Anmeldung :
**13.04.94 Patentblatt 94/15**

(45) Bekanntmachung des Hinweises auf die
Patenterteilung :
**30.08.95 Patentblatt 95/35**

(84) Benannte Vertragsstaaten :
**DE FR GB**

(56) Entgegenhaltungen :
**EP-A- 0 378 689**
**US-A- 4 876 731**

(56) Entgegenhaltungen :
**INTERNATIONAL NEURAL NETWORK CON-FERENCE INNC 90 PARIS Bd. 2, 9. Juli 1990, PARIS, FRANCE Seiten 809 - 812 MARSHALL 'Representation of uncertainty in self- organi-zing neural networks'**
**INTERNATIONAL NEURAL NETWORK CON-FERENCE INNC 90 PARIS Bd. 2, 9. Juli 1990, PARIS, FRANCE Seiten 902 - 907 SUN 'The discrete neuronal model and the probabilistic discrete neuronal model'**
**IEEE FIRST INTERNATIONAL CONFERENCE ON NEURAL NETWORKS Bd. 3, 21. Juni 1987, SAN DIEGO, USA Seiten 51 - 58 GAINES 'Un-certainty as a foundation of computational power in neural networks'**

(73) Patentinhaber : **SIEMENS AKTIENGESELLSCHAFT**
**Wittelsbacherplatz 2**
**D-80333 München (DE)**

(72) Erfinder : **KÄMMERER, Bernhard**
**Unterhachinger Strasse 19 a**
**D-81737 München (DE)**

**Beschreibung**

Die aus der Literatur bekannten Arten von künstlichen neuronalen Netzen weisen die Eigenschaft auf, daß die Eingangsdaten direkt mit einem Knoten eines Netzes verbunden sind. Aus diesem Grunde ist es nicht möglich, unsichere Daten auch bei bekannten Unsicherheitsfaktoren von einem Knoten zu entkoppeln. Stattdessen nimmt man an, daß während eines Trainings mit einem statistisch signifikanten Satz von Trainingsdaten automatisch Gewichtsfaktoren mit Werten nahe bei 0 für diejenigen Eingangsleitungen eingestellt werden, die mit großen Unsicherheiten behaftet sind. Im Erkennungsmodus bewirken diese kleinen Gewichtswerte dann eine Maskierung der entsprechenden Daten.

Diese Vorgehensweise hat den Nachteil, daß zum einen diese Einstellungen statisch sind, d. h. daß einmal als unsicher eingestufte Eingangsverbindungen immer mit kleinen Werten ihrer Gewichtsfaktoren behaftet und damit nur von geringem Einfluß auf das Verhalten des Netzwerkes sind, und daß es zum anderen für viele Anwendungen nahezu unmöglich ist, einen wirklich signifikanten Satz von Trainingsdaten im Voraus zu bestimmen. Da in vielen Anwendungsgebieten der neuronalen Netze, wie z. B. in der Bild- und Sprachverarbeitung nur ein sehr eingeschränktes Wissen vorhanden ist, bedeutet die Forderung nach signifikanten Trainingsdaten die Aufnahme und Speicherung einer extrem großen Stichprobe und damit auch extrem lange Trainingszeiten für ein neuronales Netzwerk.

Die geschilderten Umstände führen meist dazu, daß mit einer den Möglichkeiten angepaßten stark eingeschränkten Trainingsstichprobe gearbeitet werden muß, wodurch die resultierenden Netzwerke nur für sehr spezielle Situationen repräsentativ sein können. In diesen Fällen führen dann Daten, die nicht mit denen der Trainingsphase kohärent sind, zu Problemen in der Erkennungsphase. Falls das Verhalten der Daten systematische Gründe hat, kann nichts anderes getan werden, als das Netzwerk mit einem besser angepaßten Satz von Trainingsdaten erneut zu trainieren. Ist aber andererseits das widersprüchliche Datum durch eine erkennbare Störung bedingt bzw. kann ein Bewertungskriterium für die Verläßlichkeit eines Datums anggegeben werden, ist es wünschenswert, dieses Wissen in der Berechnung durch das Netzwerk zu berücksichtigen.

Der Erfindung liegt die Aufgabe zugrunde, ein Verfahren anzugeben, mit dem bekannte Unsicherheiten von Eingangsdaten neuronaler Netzwerke berücksichtigt werden können, um das Verhalten eines neuronalen Netzwerkes in der Testphase zu verbessern. Diese Aufgabe wird durch ein Verfahren zur Verarbeitung von Unsicherheiten von Eingangsdaten in neuronalen Netzwerken mit Merkmalen nach Anspruch 1 gelöst.

Vorteilhafte Weiterbildungen des Verfahrens ergeben sich aus den Unteransprüchen.

Fig. 1 zeigt den Raum der möglichen Eingangssignale eines Neurons mit zwei Eingängen, in denen zwei Klassen von Trainingsdaten, welche durch eine eindimensionale Hyperebene (Gerade) getrennt sind, eingezeichnet sind.

Fig. 2 zeigt die gleiche Situation wie Fig. 1 mit Testdaten, deren Varianz die der Trainingsdaten übersteigt.

Fig. 3 zeigt die gleiche Situation wie Fig. 2 mit einer zweiten Hyperebene (Gerade), welche die beiden Klassen von Testdaten zutreffend separiert.

Im folgenden wird die Erfindung anhand eines bevorzugten Ausführungsbeispiels sowie anhand der Figuren näher erläutert.

Die in dieser Patentanmeldung verwendeten Fachbegriffe sind allgemein üblich und sind in dem Buch von D.E. Rumelhart, J.L. Mac Clelland (Herausgeber): "Parallel Distributed Processing, Vol. 1: Foundations", MIT Press, Cambridge MA (1986), speziell in dem Artikel "Learning Internal Representations by Error Back Propagation" von D.E. Rumelhart, G.E. Hinton, R.J. Williams erläutert.

Neuronale Netze sind im allgemeinen aus einer Vielzahl von Neuronen aufgebaut, welche aus einer Vielzahl von Eingängen unter Verwendung von Gewichtsfaktoren eine gewichtete Summe berechnen und diese gewichtete Summe unter Verwendung einer vorzugsweise sigmoidalen Transferfunktion einer Schwellwertentscheidung unterwerfen. Hierdurch kann jedes Neuron zwei Klassen seiner Eingangsdaten unterscheiden, wobei es für die eine Klasse die Ausgangsaktivität "0", für die andere Klasse die Ausgangsaktivität "1" verwendet. Die Verbindungsgewichte (Gewichtsfaktoren) zwischen den Eingängen und dem Neuron werden in einer Trainingsphase durch Anpassung der Gewichtsfaktoren an einen Satz von Trainingsdaten eingestellt bzw. erlernt. Ein mögliches Trainingsverfahren (Rumelhart, 1986) realisiert einen Gradientenabstieg über einer Fehleroberfläche. Durch Verwendung einer sigmoidalen Transferfunktion wird die bestmögliche Trennbarkeit der beiden Klassen erreicht.

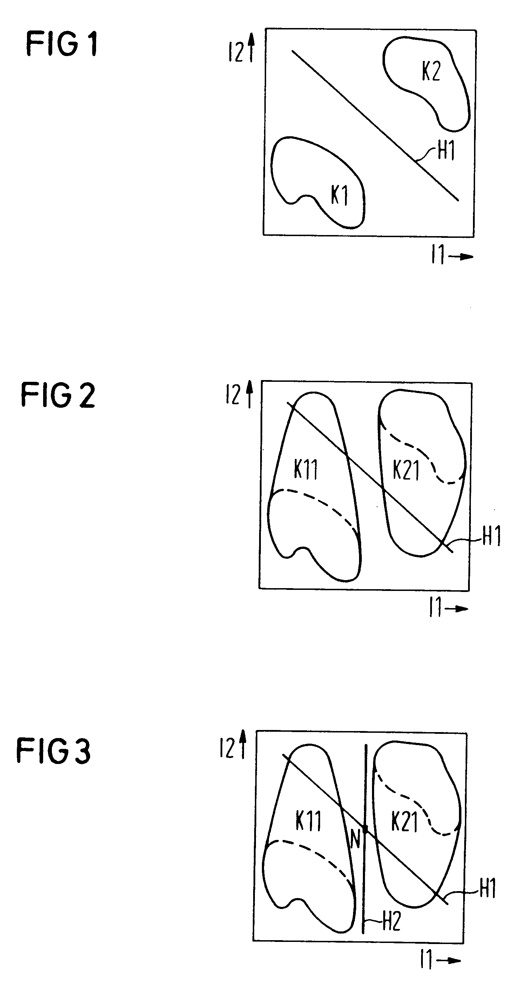

Zum besseren Verständnis wird das Verfahren zunächst - ohne die Allgemeingültigkeit zu beschränken - am Beispiel eines einzelnen Neurons des Perceptron-Modells mit K = 2 Eingangsleitungen abgeleitet. Dieses Neuron kann zwei Klassen unterscheiden, wobei für die eine Klasse die Ausgangsaktivität des Neurons "0", für die andere "1" ist. Es sei ferner angenommen, daß in diesem Beispiel die Klassen durch eine lineare Ebene getrennt werden können und daß nur eine Eingangsleitung die notwendige Information für diese Unterscheidung beiträgt. Die zweite Eingangsleitung soll hier nur redundante Informationen führen. Fig. 1 zeigt zwei Klas-

EP 0 591 259 B1

sen K1 bzw. K2 von Trainingsdaten, die durch eine lineare Hyperebene H1 (Gerade) getrennt werden können. Da die beiden Klassen von Trainingsdaten sowohl durch eine horizontal als auch durch eine vertikal verlaufende Hyperebene getrennt werden könnten, steht nicht von vornherein fest, welcher der beiden Eingänge I1 bzw. I2 die zur Trennung der beiden Klassen maßgebende Information trägt. Fig. 2 zeigt die gleiche Situation wie in Fig. 1, wobei allerdings eine größere Datenmenge - die Testdaten, welche die Trainingsdaten ebenfalls umfassen - verwendet wurde. Die beiden Klassen K11 bzw. K21 von Testdaten sind nun nicht mehr durch eine horizontal verlaufende Hyperebene zu trennen, sondern lediglich durch eine vertikal verlaufende Hyperebene. Die in Fig. 1 und Fig. 2 sichtbare diagonal verlaufende Hyperebene H1 ist zwar in der Lage, die Trainingsdaten zutreffend in zwei Klassen einzuteilen, nicht aber die Testdaten. Dies hängt damit zusammen, daß die Testdaten eine größere Varianz - hauptsächlich in dem Eingangssignal I2 - aufweisen als die Trainingsdaten. Es ist also der Eingang 11, welcher die Information zur zutreffenden Trennung der Testdatenklassen K11 bzw. K21 trägt. Ist nun - wie in vielen Anwendungsfällen - von vornherein bekannt, daß einer der Eingänge oder im allgemeinen mehrere Eingänge mit einer Unsicherheit behaftet sind und daher keine zuverlässige Trennung der Testdaten erlauben, ist es wünschenswert, ein Verfahren anzuwenden, welches bei Verwendung der Trainingsdaten von Fig. 1 auf die Hyperebene H2, welche in Fig. 3 dargestellt ist, führt. Die Hyperebene H2 trennt nämlich sowohl die Trainingsdaten als auch die Testdaten zutreffend in zwei Klassen K11 bzw. K21. Ein solches Verfahren muß von dem Wissen über die Unsicherheit der Information des Eingangs I2 Gebrauch machen. Die in den Fig. 1, 2 und 3 dargestellte Situation ist eine starke Vereinfachung der bei vielen Anwendungen, wie z. B. in der Bild- und Sprachverarbeitung auftretenden Situation, bei denen hochdimensionale Eingangsvektoren vorkommen, deren einzelnen Komponenten eine erhebliche Redundanz aufweisen.

Die allgemeine erfindungsgemäße Lösung des beschriebenen Problems besteht darin, die Eingangswerte eines Neurons oder mehrerer Neuronen des neuronalen Netzes nicht direkt mit den Gewichtsfaktoren zu multiplizieren und aufzusummieren, sondern aus den Eingangssignalen der Neuronen zunächst modifizierte Eingangssignale zu berechnen, welche die unterschiedlichen Unsicherheiten verschiedener Eingangssignale zutreffend berücksichtigen.

Im allgemeinen berechnet ein Neuron nämlich aus seinen Eingangswerten $i_k$ einen Ausgangswert a nach der Formel

$$(1) \qquad a = f ( \Sigma_{k = 1...K} \qquad w_k \cdot i_k + \theta ),$$

wobei a der Ausgangswert (Aktivität des Neurons), $w_k$ der k-te Gewichtswert (Gewichtsfaktor), $i_k$ der k-te Eingangswert (Eingangssignal) und $\theta$ ein Schwellwert ist. Sind für jeden Eingangsvektor $I=(i_1, ..., i_k)$ die Sicherheitswerte $s_k$ mit Werten zwischen 0 und 1 gegeben, so können modifizierte Eingangswerte $j_k$ nach folgender Formel berechnet werden:

$$(2) \qquad j_k = s_k \cdot i_k + (1 - s_k) \cdot n_k,$$

Hierbei ist $n_k$ der k-te Wert eines Neutralvektors N. Die Komponenten $n_k$ des Neutralvektors geben also diejenigen Werte der modifizierten Eingangssignale an, welche diese bei maximaler Unsicherheit (minimale Sicherheit, $s_k = 0$) annehmen. Vorteilhafte Werte für die Komponenten de Neutralvektors werden später angegeben.

Mit diesen modifizierten Eingangssignalen kann nun die Neuronenaktivität wie folgt berechnet werden:

$$(3) \qquad a = f ( \Sigma_{k = 1...K} \qquad w_k \cdot j_k + \theta ),$$

Hierdurch ist die der Erfindung zugrundeliegende Aufgabe gelöst, welche darin besteht, bekannte Unsicherheiten vor Eingangssignalen in neuronalen Netzwerken zur Verbesserung des Netzwerkverhaltens zu verwenden. Es ist aber weiterhin vorteilhaft, wenn jedes Neuron zusätzlich zu seinem Ausgangswert (Neuronenaktivität) eine durchschnittliche Sicherheit seiner Eingangssignale nach folgender Beziehung

$$(4) \qquad s_0 = \frac{1}{K} \Sigma_{k = 1...K} \qquad s_k$$

aus den Sicherheitswerten $s_k$ seiner Eingangssignale berechnet. Dieser durchschnittliche Sicherheitswert kann dann an Neuronen nachfolgender Stufen des neuronalen Netzwerks weitergegeben werden, wodurch auch Neuronen in nachfolgenden Stufen Sicherheitswerte nach dem gleichen Verfahren auswerten können. Insbesondere können die Neuronen der letzten Stufe eines neuronalen Netzwerks somit die Sicherheit ihrer Ausgangswerte berechnen, was zur Beurteilung der Netzwerkleistung, d. h. der Qualität der Klassifikation verwendet werden kann. Das hier beschriebene Verfahren kann ohne weiteres auch in rückgekoppelten neuronalen Netzen Verwendung finden. Hierbei sind dann einige der Sicherheitswerte nicht vom Anwender vorgegeben, sondern von anderen Neuronen im neuronalen Netz berechnet. Der Begriff Neuronales Netz kann also in der allgemeinsten Bedeutung dieses Wortes verwendet werden, wobei insbesondere an neuronale Netze zu denken ist, welche durch entsprechende Computerprogramme auf hierfür geeigneten Rechenanlagen realisiert werden. Auf der anderen Seite kann das Verfahren auch im Rahmen von schaltungstechnisch realisierten neuronalen Netzen verwendet werden.

Der Neutralvektor N kann als Schnittpunkt der durch das Trainingsverfahren eingestellten Hyperebene mit

3

denjenigen Hyperebenen berechnet werden, welche sich ergeben, wenn jeweils ein Eingangssignal eines Neurons unberücksichtigt bleibt. Hierbei erhält man K verschiedene Hyperebenen für je ein Neuron mit K Eingängen: Eine Hyperebene, die den K-dimensionalen Raum unterteilt, sowie K - 1 weitere Hyperebenen, die die K - 1-dimensionalen Unterräume unterteilen. Ein solches mehrfaches Trainingsverfahren kann simultan durchgeführt werden, wobei etwa der K-fache Aufwand an Rechenzeit und Speicherplatz notwendig wird. Am Ende eines solchen Mehrfachtrainingsverfahrens müssen kann K lineare Gleichungen zur Bestimmung des Schnittpunktes aller Hyperebenen gelöst werden.

Da dieser Ansatz sehr aufwendig ist und zur Trainingsphase eine weitere Phase mit der Lösung des linearen Gleichungssystems erfordert, wird ein weiteres spezielles Verfahren zur iterativen Bestimmung des Neutralvektors vorgeschlagen. Dieses Verfahren kommt ohne zusätzliche Berechnungsschritte aus und ist insgesamt weniger aufwendig. Dieses weitere Verfahren sieht vor, anstelle des Schnittpunktes von K Hyperebenen den Schwerpunkt der im Training beobachteten, auf die durch die momentanen Gewichtsfaktoren definierte Trennebene H projizierten Eingangswerte des Neurons zu ersetzen. Hierzu müssen lediglich K zusätzliche Parameter zur Charakterisierung des Neutralvektors gespeichert und nach jeder Präsentation neuer Trainingsdaten I angepaßt werden. Nach einer geeigneten Initialisierung des Neutralvektors mit dem Wert $N_0$ umfaßt das Verfahren zur iterativen Berechnung des Neutralvektors damit für jede Präsentation neuer Trainingsdaten I im wesentlichen 2 Schritte:

1) Bestimmung der Projektion I′ von I auf H und

2) Korrektur von $N_{alt}$ in $N_{neu}$ mit Hilfe von I′

Schritt 1 stellt sicher, daß alle Modifikationen von N in der Trennebene H erfolgen. Schritt 2 berechnet iterativ den Schwerpunkt aller Projektionen.

Die Projektion I′ von I auf H ist bestimmt durch

$$(5) \qquad I' = I - \frac{W^T \cdot I + \theta}{W^T \cdot W} \cdot W$$

wobei W den Spaltenvektor der Verbindungsgewichte $w_k = (w_1, ... w_k)$, welcher die Trennebene H definiert, $W^T$ den transponierten Vektor W und $\theta$ den Offset der Trennebene H bezeichnet. Die Korrektur (Anpassung) von N erfolgt dann nach der Vorschrift

$$(6) \qquad N_{neu} = N_{alt} + \gamma \cdot (I' - N_{alt}),$$

wobei $N_{alt}$ der vorherige Wert des Neutralvektors, $N_{neu}$ der korrigierte Wert des Neutralvektors, und $\gamma$ ein Faktor zwischen 0 und 1 ist, welcher die Geschwindigkeit der Korrektur des Neutralvektors bestimmt. $\gamma$ kann konstant gewählt werden, falls für jede Klasse etwa gleich viele Beispiele verfügbar sind. Ist dies nicht der Fall, muß $\gamma$ entsprechend der Klassenzugehörigkeit des aktuellen Trainingsmusters umgekehrt proportional zur Anzahl der Beispiele dieser Klasse gewählt werden.

Falls der Vektor W, der die Trennebene H definiert, während des Adaptionsprozesses von N konstant bleibt (d. h. wenn die Trennebene in einer vorangegangenen Lernphase eingestellt wurde) und falls die Initialisierung $N_0$ so gewählt wurde, daß die Gleichung für H erfüllt ist, gilt dies auch nach der Adaption von N. Auf der anderen Seite können beide Prozesse (das Training der Trennebene H und die Adaption des Neutralvektors N) parallel durchgeführt werden. Dabei wird $N_0$ mit kleinen Zufallszahlen vorbelegt. Auch in diesem Fall, in dem N der sich stetig verändernden Trennebene H folgt, stellt sich nach genügend langer Adaption der gewünschte Vektor N ein.

## Patentansprüche

1. Trainings-Verfahren zu Verarbeitung von bekannten Unsicherheiten von Eingangssignalen von Trainingsdaten in Neuronalen Netzwerken, bei dem aus Eingangssignalen $i_k$ von Neuronen modifizierte Eingangssignale $j_k$ nach der Formel

$$j_k = s_k \cdot i_k + (1 - s_k) \cdot n_k$$

berechnet werden, wobei $s_k$ ein Maß für die Sicherheit des Eingangssignals $i_k$ mit Werten $0 \le s_k \le 1$ und $n_k$ ein neutraler Wert ist, welcher den Wert des modifizierten Eingangssignals $j_k$ bei maximaler Unsicherheit ($s_k = 0$) angibt, wobei die neutralen Werte ($n_k$) wenigstens eines Neurons die Komponenten eines Neutralvektors (N) bilden, welcher ein Punkt auf derjenigen Hyperebene ist, die einen Satz von Trainingsdaten in zwei Klassen unterteilt.

2. Verfahren nach Anspruch 1, bei dem Neuronen zusätzlich zu ihrer Aktivität

$$a = f(\Sigma_{k = 1...K} \qquad w_k \cdot j_k + \theta)$$

einen weiteren Ausgangswert

$$s_0 = \frac{1}{K} \Sigma_{k\,=\,1...K} \qquad s_k$$

ermitteln, welcher ein Maß für die durchschnittliche Sicherheit ihrer Eingangssignale ist.

3. Verfahren nach Anspruch 2, bei dem der Neutralvektor ein gemeinsamer Punkt aller derjenigen Hyperebenen ist, welche die Trainingsdaten in zwei Klassen unterteilen, wenn man jeweils ein Eingangssignal unberücksichtigt läßt.

4. Verfahren nach Anspruch 1, bei dem der Neutralvektor N mit Hilfe der Beziehungen

$$I' = I - \frac{W^T \cdot I + \theta}{W^T \cdot W} \cdot W$$

sowie

$$N_{neu} = N_{alt} + \gamma \cdot (I' - N_{alt})$$

iterativ aus den Eingangssignalen I eines Satzes von Trainingsdaten berechnet wird, wobei

W   der Vektor der Gewichte eines Neurons,
$W^T$   der transponierte Vektor dieser Gewichte,
$\theta$   die Schwelle dieses Neurons,
$N_{neu}$   ein neuer Wert des Neutralvektors,
$N_{alt}$   ein alter Wert des Neutralvektors und
$\gamma$   eine Konstante zwischen 0 und 1 ist, welche die Geschwindigkeit der Korrektur des Neutralvektors bestimmt.

**Claims**

1. Training method of processing known uncertainties of input signals of training data in neural networks, in which method modified input signals $j_k$ are computed from input signals $i_k$ of neurons in accordance with the formula:

$$j_k = s_k \cdot i_k + (1 - s_k) \cdot n_k,$$

in which $s_k$ is a measure of the certainty of the input signal $i_k$ with values $0 \leq s_k \leq 1$ and $n_k$ is a neutral value which indicates the value of the modified input signal $j_k$ at maximum uncertainty ($s_k = 0$), the neutral values ($n_k$) of at least one neuron forming the components of a neutral vector (N) which is a point on that hyperplane which subdivides a set of training data into two classes.

2. Method according to Claim 1, in which neurons, in addition to their activity

$$a = f(\Sigma_{k\,=\,1...K} \qquad w_k \cdot j_k + \theta)$$

determine a further output value

$$s_0 = \frac{1}{K} \Sigma_{k\,=\,1...K} \qquad s_k$$

which is a measure of the average certainty of their input signals.

3. Method according to Claim 2, in which the neutral vector is a common point of all those hyperplanes which subdivide the training data into two classes, if in each instance one input signal is not taken into account.

4. Method according to Claim 1, in which the neutral vector N is iteratively computed by means of the relations:

$$(5) \qquad I' = I - \frac{W^T \cdot I + \theta}{W^T \cdot W} \cdot W$$

and

$$(6) \qquad N_{neu} = N_{old} + \gamma \cdot (I' - N_{old}),$$

from the input signals I of a set of training data, in which

W   is the vector of the weightings of a neuron,
$w^T$   is the transposed vector of these weightings,
$\theta$   is the threshold of this neuron,
$N_{neu}$   is a new value of the neutral vector,
$N_{old}$   is an old value of the neutral vector and
$\gamma$   is a constant between 0 and 1, which determines the speed of correction of the neutral vector.

## Revendications

1. Procédé d'apprentissage destiné à traiter des incertitudes connues de signaux d'entrée de données d'apprentissage dans des réseaux neuronaux, dans lequel on calcule, à partir de signaux $i_k$ d'entrée de neurones, des signaux $j_k$ d'entrée modifiés suivant la formule

$$j_k = s_k.i_k + (1 - s_k).n_k$$

$s_k$ étant une mesure de l'incertitude du signal $i_k$ d'entrée pour des valeurs $0 \leq s_k \leq 1$ et $n_k$ étant une valeur neutre, qui indique la valeur du signal $j_k$ d'entrée modifié pour une incertitude maximale ($s_k = 0$), les valeurs ($n_k$) neutres d'au moins un neurone formant les composantes d'un vecteur (N) neutre, qui est un point de l'hyperplan, qui subdivise un ensemble de données d'apprentissage en deux classes.

2. Procédé suivant la revendication 1, dans lequel des neurones déterminent, en plus de leur activité

$$a = f(\Sigma k = 1...K \quad {}^w k.j_k + {}^\theta)$$

une autre valeur de sortie

$$s_0 = \frac{1}{K}\Sigma k = 1...K \quad {}^s k$$

qui est une mesure de la certitude moyenne de leurs signaux d'entrée.

3. Procédé suivant la revendication 2, dans lequel le vecteur neutre est un point commun de tous les hyperplans, qui subdivisent les données d'apprentissage en deux classes, lorsque l'on ne tient pas compte d'un signal d'entrée.

4. Procédé suivant la revendication 1, dans lequel on calcule le vecteur neutre N à l'aide des relations

$$I' = I - \frac{W^T.I + \theta}{W^T.W} \cdot W$$

ainsi que

$$N_{neu} = N_{alt} + \gamma . (I' - N_{alt})$$

de manière itérative à partir des signaux I d'entrée d'un ensemble de données d'apprentissage,

W       étant le vecteur des pondérations d'un neurone,
$W^T$     étant le vecteur transposé de ces pondérations,
$\theta$       étant le seuil de ce neurone,
$N_{neu}$    étant une nouvelle valeur du vecteur neutre,
$N_{alt}$     étant une ancienne valeur du vecteur neutre, et
$\gamma$       étant une constante comprise entre O et 1, qui définit la vitesse de la correction du vecteur neutre.

FIG 1

FIG 2

FIG 3